# EUROPÄISCHE PATENTSCHRIFT

(11) **EP 3 829 949 B1**
(45) Veröffentlichungstag und Bekanntmachung des Hinweises auf die Patenterteilung: **09.08.2023**
(21) Anmeldenummer: 19737054.7
(22) Anmeldetag: 03.07.2019
(51) Int. Cl.: B60W 30/165, G08G 1/16, G08G 1/00, G05D 1/02

(54) **VERFAHREN ZUM EINSTELLEN EINER FAHRZEUG-VERZÖGERUNG EINES FAHRZEUGES IN EINEM PLATOON SOWIE PLATOONING-REGELSYSTEM UND FAHRZEUG**
METHOD FOR SETTING A VEHICLE DECELERATION OF A VEHICLE IN A PLATOON, PLATOONING CONTROL SYSTEM AND VEHICLE
PROCÉDÉ DE RÉGLAGE D'UN RALENTISSEMENT DE VÉHICULE D'UN VÉHICULE DANS UN CONVOI AUTOMATISÉ AINSI QUE SYSTÈME DE RÉGULATION DE CONVOI AUTOMATISÉ ET VÉHICULE

(30) Priorität: 02.08.2018 DE 102018118744
(43) Veröffentlichungstag der Anmeldung: 09.06.2021
(73) Patentinhaber: ZF CV Systems Europe BV, 1170 Brussels (BE)
(72) Erfinder: DIECKMANN, Thomas, 30982 Pattensen (DE); LÜLFING, Ralph-Carsten, 30826 Garbsen (DE); KALLENBACH, Stephan, 30161 Hannover (DE)
(74) Vertreter: Rabe, Dirk-Heinrich
(86) Internationale Anmeldenummer: PCT/EP2019/067836
(87) Internationale Veröffentlichungsnummer: WO 2020/025243

(56) Entgegenhaltungen:
- EP-A2- 0 263 262
- DE-A1-102010 028 637
- DE-A1-102016 007 676
- DE-A1-102016 011 325
- JP-A- 2008 234 183
- JP-A- 2012 256 167
- US-A1- 2013 041 567

## Beschreibung

Die Erfindung betrifft ein Verfahren zum Einstellen einer Fahrzeug-Verzögerung eines Fahrzeuges, insbesondere Nutzfahrzeuges, in einem Platoon sowie ein Platooning-Regelsystem zur Durchführung des Verfahrens und ein Fahrzeug mit einem derartigen Platooning-Regelsystem.

Es ist bekannt, dass sich mehrere Fahrzeuge aufeinander abgestimmt auf einer Fahrbahn in kurzen Abständen hintereinander bewegen können, um durch einen verringerten Luftwiderstand Kraftstoff zu sparen. Dazu können die heute üblichen Sicherheitsabstände zwischen den einzelnen Fahrzeugen des Platoons unterschritten werden, wenn sich die Fahrzeuge untereinander beispielsweise über eine drahtlose Kommunikation koordinieren. Koordiniert werden die einzelnen Fahrzeuge des Platoons dabei über ein Platooning-Regelsystem, das in jedem der Fahrzeuge installiert ist, wobei die Platooning-Regelsysteme in den jeweiligen Fahrzeugen miteinander über die drahtlose Kommunikation kommunizieren können und dabei beispielsweise geometrische und/oder fahrdynamische Informationen austauschen können.

Dadurch kann beispielsweise eine Fahrzeug-Geschwindigkeit der einzelnen Fahrzeuge sowie ein Soll-Abstand zwischen den einzelnen Fahrzeugen des Platoons nach gewissen Kriterien vorgegeben werden. Dadurch wird gewährleistet, dass die einzelnen Fahrzeuges des Platoons schneller aufeinander reagieren können, wodurch das Unterschreiten des Sicherheitsabstandes ohne eine maßgebliche Beeinträchtigung der Sicherheit gewährleistet werden kann, da die Reaktionszeiten verkürzt werden.

Probleme können sich allerdings daraus ergeben, dass das maximale Bremsvermögen bzw. eine Maximal-Verzögerung oder auch ein Mindest-Bremsweg der einzelnen Fahrzeuge nicht genau bekannt ist und daher eine Abstimmung dahingehend erschwert ist. Dies kann in einer manuell oder einer automatisiert veranlassten Bremssituation, beispielsweise in einer Notbremssituation, dazu führen, dass bei sehr geringen Abständen zwischen den Fahrzeugen im Platoon und hohen Fahrzeug-Verzögerungen Auffahrunfälle auftreten können, wenn jedes der Fahrzeuge mit seiner individuellen Maximal-Verzögerung abbremst und die Soll-Abstände daran nicht angepasst sind. Dies ist beispielsweise dann der Fall, wenn ein vorausfahrendes Führungsfahrzeug eine höhere Maximal-Verzögerung bzw. ein stärkeres maximales Bremsvermögen aufweist als ein dahinter folgendes Folgefahrzeug.

Eine Abstimmung zwischen den einzelnen Fahrzeugen des Platoons ist erschwert, da die Maximal-Verzögerung einzelner Fahrzeuge im Platoon nicht immer oder nur sehr ungenau bekannt ist. Dies folgt daraus, dass die Maximal-Verzögerung vorab nicht ermittelt wurde bzw. sich das maximale Bremsvermögen für jedes Fahrzeug je nach Beladung oder Anhängerkonfiguration oder in Abhängigkeit von Umgebungsbedingungen auch ändern kann. Für Bremssituationen mit hohen Fahrzeug-Verzögerungen, insbesondere in Notbremssituationen, kann ein sicherer Fahrbetrieb in einem Platooning-Modus somit nicht immer gewährleistet werden.

In US 9,632,507 B1 ist beschrieben, dass die Fahrzeuge des Platoons nach ihrem Bremsvermögen, das durch eine dem jeweiligen Fahrzeug zugeordneten Maximal-Verzögerung charakterisiert ist, geordnet werden. Dadurch kann sichergestellt werden, dass ein vorausfahrendes Fahrzeug nicht stärker abbremsen kann als ein nachfolgendes Fahrzeug.

Probleme können sich daraus ergeben, dass das maximale Bremsvermögen bzw. die Maximal-Verzögerung der einzelnen Fahrzeuge nicht genau bekannt ist. Dies kann insbesondere in einer Notbremssituation dazu führen, dass bei sehr geringen Abständen zwischen den Fahrzeugen im Platoon Auffahrunfälle auftreten können, wenn jedes der Fahrzeuge mit seiner individuellen Maximal-Verzögerung abbremst. Dies ist beispielsweise dann der Fall, wenn ein vorausfahrendes Fahrzeug eine höhere Maximal-Verzögerung aufweist als das dahinter folgende Fahrzeug. Eine Abstimmung zwischen den einzelnen Fahrzeugen des Platoons ist erschwert, da die Maximal-Verzögerungen nicht oder nur sehr ungenau bekannt sind. Für Notbremssituationen kann somit ein sicherer Fahrbetrieb in einem Platooning-Modus nicht immer gewährleistet werden.

Gemäß WO 2016/135207 A1 und WO 2016/134770 A1 ist weiterhin vorgesehen, dass der Abstand zwischen den Fahrzeugen des Platoons bei Erkennen einer möglichen Kollision angepasst wird. Dabei wird in Abhängigkeit des Bremsvermögens bzw. der Maximal-Verzögerung des jeweiligen Fahrzeuges ein Puffer-Abstand zwischen den jeweiligen Fahrzeugen berücksichtigt. Das Bremsvermögen wird dabei für jedes Fahrzeug aus einer Reibungsbetrachtung abgeschätzt und demnach während der Fahrt ermittelt.

Der Stand der Technik geht somit davon aus, dass die Maximal-Verzögerung eines Fahrzeuges genau bekannt ist. Dies ist aber tatsächlich nicht der Fall. Vielmehr haben eine Vielzahl von Parametern einen Einfluss auf die Maximal-Verzögerung. Beispielsweise kann sich diese bereits aufgrund von Verschleiß kontinuierlich verändern. Ein aktueller Wert der Maximal-Verzögerung kann somit nur durch z.B. täglich wiederholt durchgeführte Vollbremsprüfungen ermittelt werden, was allerdings nicht praxistauglich ist.

Die EP0263262A2 offenbart ein Abstandsregelsystem für wenigstens zwei hintereinander fahrende Kraftfahrzeuge (Fahrzeugverband), wobei die Kraftfahrzeuge mit aktiven Sende- und Empfangsanlagen ausgestattet sind, über die sie sich Informationen vorzugsweise über eine elektromagnetische oder akustische Wellenausbreitung gegenseitig übermitteln können und jeweils eine, eine Antriebs- und eine Verzögerungsleistung des Kraftfahrzeugs steuernde bzw. regelnde und eine fahrzeugeigene Geschwindigkeit und einen Abstand zu einem vorausfahrenden Kraftfahrzeug ermittelnde Steuereinrichtung aufweisen, wobei zur Regelung des Abstands zwischen mehreren, innerhalb eines Fahrzeugverbands fahrenden Kraftfahrzeugen deren Antriebs- bzw. Verzögerungsleistung so gesteuert wird, dass die zeitliche Änderung der fahrzeugeigenen Geschwindigkeit dvi/dt eines jeden Kraftfahrzeugs einer Sollbeschleunigung dvs/dt mit minimaler Differenz bzw. vorgegebener Dynamik nachgeführt wird. Hierzu wird innerhalb eines Kraftfahrzeugs des Fahrzeugverbands die von den Kraftfahrzeugen jeweils aufbringbare Sollbeschleunigung ermittelt und daraus die erforderliche Sollbeschleunigung bereitgestellt und den anderen Fahrzeugen drahtlos übermittelt.

Die US20130041567A1 betrifft ein Fahrunterstützungssystem, welches eine drahtlose Kommunikationseinheit zum Empfangen der Geschwindigkeitssteuerkapazität eines nachfolgenden Fahrzeugs verwendet und die empfangene Geschwindigkeitssteuerkapazität mit einer Geschwindigkeitssteuerkapazität des eigenen Fahrzeugs vergleicht. Wenn die Geschwindigkeitsregelungskapazität des Folgefahrzeugs höher ist als die Kapazität des Eigenfahrzeugs, wird eine maximale Verzögerung des Eigenfahrzeugs auf einen begrenzten Wert beschränkt. Außerdem wird ein Soll-Fahrzeugabstand zu einem führenden Fahrzeuggemäß dem eingeschränkten Wert des Eigenfahrzeugs eingestellt, wodurch eine Verringerung des Fahrzeugabstands zu dem führenden Fahrzeug für jedes der Fahrzeuge in einem Konvoi ermöglicht wird.

Aufgabe der Erfindung ist daher, ein Verfahren zum Einstellen einer Fahrzeug-Verzögerung eines Fahrzeuges in einem Platoon anzugeben, mit dem ein sicherer Fahrbetrieb der Fahrzeuge des Platoons gewährleistet werden kann. Aufgabe der Erfindung ist weiterhin, ein Platooning-Regelsystem zur Durchführung des Verfahrens und ein Fahrzeug mit diesem Platooning-Regelsystem anzugeben.

Diese Aufgabe wird durch ein Verfahren nach Anspruch 1, ein Platooning-Regelsystem nach Anspruch 14 und ein Fahrzeug nach Anspruch 17 gelöst.

Die Unteransprüche geben bevorzugte Weiterbildungen an. Erfindungsgemäß ist demnach vorgesehen, dass die Fahrzeug-Verzögerung eines Fahrzeuges, das als Führungsfahrzeug oder als Folgefahrzeug in einem Platoon unterwegs sein kann, bei Erfüllen eines Begrenzungskriteriums auf eine Grenz-Verzögerung begrenzt wird, wobei von der Grenz-Verzögerung vorzugsweise angenommen wird, dass jedes der hinter dem Fahrzeug fahrenden Folgefahrzeuge des Platoons zumindest diese Grenz-Verzögerung umsetzen kann, so dass das Fahrzeug als vorausfahrendes Führungsfahrzeug oder als vorausfahrendes Folgefahrzeug in einer Bremssituation maximal so stark verzögert werden kann, wie jedes hinter dem Fahrzeug fahrende Folgefahrzeug des Platoons ebenfalls.

Dadurch wird bereits der Vorteil erreicht, dass sich die Fahrzeuge in einer beliebigen Bremssituation aufeinander abstimmen können, auch wenn die Maximal-Verzögerung zumindest eines Fahrzeuges nicht bekannt ist. D.h. auch in einem Platoon, in dem einzelne Fahrzeug keine oder nur sehr ungenaue Information über die Maximal-Verzögerung bereitstellen, kann dennoch ein sicherer Fahrbetrieb gewährleistet werden. Durch die Begrenzung wird somit erreicht, dass die Fahrzeug-Verzögerung des Fahrzeuges nicht höher eingestellt und das Fahrzeug somit nicht stärker abgebremst werden kann als durch die Grenz-Verzögerung vorgegeben, wobei von der Grenz-Verzögerung angenommen wird, dass diese von jedem anderen Fahrzeug im Platoon zumindest umgesetzt werden kann.

Somit kann für das Fahrzeug zwar grundsätzlich eine höhere Fahrzeug-Verzögerung als die Grenz-Verzögerung eingestellt werden, d.h. bis zur unbekannten Maximal-Verzögerung, allerdings wird die Einstellung von höheren Werten als die Grenz-Verzögerung durch die erfindungsgemäße Begrenzung verhindert.

Unter einem Platoon wird hierbei im Rahmen der Erfindung ein Fahrzeugverbund (Konvoi) aus mehreren Fahrzeugen, insbesondere Nutzfahrzeugen, verstanden, die sich in einem geringen Abstand zueinander bewegen. Das vorderste Fahrzeug wird hierbei als Führungsfahrzeug und die darauffolgenden Fahrzeuge als Folgefahrzeuge bezeichnet, wobei lediglich eines oder auch mehrere Folgefahrzeuge vorhanden sein können. Demnach kann ein Folgefahrzeug hinter einem Führungsfahrzeug fahren und/oder aber vor einem weiteren Folgefahrzeug vorausfahren.

Die einzelnen Fahrzeuge koordinieren sich hierbei untereinander über eine drahtlose Kommunikation, so dass ein entsprechend gering vorgegebener Soll-Abstand über ein Platooning-Regelsystem in jedem Fahrzeug durch Ansteuerung eines Brems- und/oder Antriebssystems eingestellt werden kann. Die Koordination kann von einem Koordinierungsfahrzeug, das entweder das Führungsfahrzeug oder einer der Folgefahrzeuge sein kann, übernommen werden. Die Abstände zwischen den Fahrzeugen sind hierbei innerhalb des Platoons derartig aufeinander abgestimmt, dass der Kraftstoffverbrauch durch entsprechend niedrige Luftwiderstände im gesamten Platoon optimiert werden kann.

Erfindungsgemäß ist dabei vorgesehen, dass die Grenz-Verzögerung in Abhängigkeit einer gesetzlich vorgegebenen Mindest-Verzögerung festgelegt wird. Dadurch wird die Grenz-Verzögerung vorteilhafterweise von einer Größe abhängig gemacht, von der angenommen wird, dass diese unter Normbedingungen von jedem Fahrzeug erfüllt werden kann.

Dabei kann vorzugsweise vorgesehen sein, dass die Grenz-Verzögerung der gesetzlichen Mindest-Verzögerung genau entspricht oder einem Wert, der von der gesetzlichen Mindest-Verzögerung um einen Sicherheitsfaktor abweicht, wobei der Sicherheitsfaktor zwischen ca. 5% und ca. 20% der gesetzlichen Mindest-Verzögerung beträgt. Dadurch kann vorteilhafterweise festgelegt werden, mit welcher Toleranz die Begrenzung der Fahrzeug-Verzögerung erfolgt. Wird demnach angenommen, dass ein Großteil der Fahrzeuge die gesetzliche Mindest-Verzögerung auch überschreiten kann, kann der Sicherheitsfaktor hoch angesetzt werden. Wird jedoch angenommen, dass die im Fahrzeug befindlichen Fahrzeuge eher nahe der gesetzlichen Mindestforderung liegen, wird der genaue gesetzlich festgelegte Mindest-Verzögerungswert von beispielsweise 5m/s² für einen LKW und 4,5 m/s² für einen LKW mit Anhänger als Grenz-Verzögerung angenommen.

Somit sind auch geringe Abweichungen denkbar, wenn angenommen wird, dass nur wenige Fahrzeuge überhaupt lediglich die gesetzliche Mindest-Verzögerung erreichen. Dadurch kann vorteilhafterweise der Folgeabstand minimiert und dennoch ein sicherer Fahrbetrieb im Platoon gewährleistet werden.

Gemäß einer bevorzugten Ausführung ist vorgesehen, dass das Begrenzungskriterium erfüllt ist, sobald der Platooning-Modus in dem Fahrzeug aktiviert wird. Die Fahrzeug-Verzögerung des sich im Platoon bewegenden Fahrzeuges wird somit unmittelbar beim Eintritt in den Platoon begrenzt und damit sichergegangen, dass in einer Bremssituation keine Auffahrunfälle passieren.

Gemäß einer alternativen Ausführung ist vorgesehen, dass das Begrenzungskriterium erst dann erfüllt ist, wenn bei einer Überwachung von Ist-Abständen zwischen dem Führungsfahrzeug und einem unmittelbar dahinter fahrenden Folgefahrzeug und/oder zwischen zwei unmittelbar hintereinander fahrenden Folgefahrzeugen des Platoons bei einem Bremsvorgang festgestellt wird, dass sich der jeweilige Ist-Abstand um zumindest einen Grenz-Abstand verringert.

Somit wird erst dann eine Begrenzung vorgenommen, wenn tatsächlich festgestellt wird, dass ein Unterschied in dem maximalen Bremsvermögen der Fahrzeuge vorliegt. Dadurch kann eine möglicherweise unnötige Begrenzung der Fahrzeug-Verzögerung vermieden werden. Erst dann, wenn tatsächlich festgestellt wird, dass eines der Fahrzeug im Platoon weniger stark bremst als ein davor fahrendes Fahrzeug, findet die Begrenzung statt.

Dazu kann vorzugsweise vorgesehen sein, dass die Ist-Abstände dynamisch über Abstandssensoren im jeweiligen Folgefahrzeug ermittelt werden. Damit kann die vorhandene Abstandssensorik des Abstandsregelsystems, das vorzugsweise auch für die Einstellung des Soll-Abstandes sorgt, auch dafür verwendet werden, die Differenz bzw. Abweichung im Bremsvermögen zu erkennen und damit zu bewerten, ob eine Begrenzung nötig ist.

Vorzugsweise ist weiterhin vorgesehen, dass das Erfüllen des Begrenzungskriteriums über eine drahtlose Datenkommunikation auf das Fahrzeug als Führungsfahrzeug oder als Folgefahrzeug übermittelt wird, so dass daraufhin die Fahrzeug-Verzögerung des Fahrzeuges auf die Grenz-Verzögerung begrenzt werden kann. Vorteilhafterweise kann somit von einem beliebigen Fahrzeug im Platoon erkannt werden, dass unterschiedliche Bremsvermögen vorliegen und somit eine Begrenzung nötig ist, und diese Erkenntnis an die anderen Fahrzeuge im Platoon weitergeleitet werden, die daraufhin die Begrenzung vornehmen. Dies kann auch über das Koordinierungsfahrzeug koordiniert werden.

Gemäß einer weiteren Ausbildung kann vorgesehen sein, dass das Begrenzungskriterium für das Fahrzeug dauerhaft als nicht erfüllt festgelegt wird, wenn das Fahrzeug ein Folgefahrzeug ist, dem kein weiteres Folgefahrzeug im Platoon folgt. Demnach kann für das letzte Fahrzeug im Platoon vorteilhafterweise festgelegt werden, dass dieses unabhängig von den anderen Fahrzeugen auch stärker bremsen kann, da das letzte Fahrzeug nicht in einen Auffahrunfall mit darauffolgenden Fahrzeugen im Platoon verwickelt werden kann.

Vorzugsweise ist vorgesehen, dass die Grenz-Verzögerung von einem Koordinierungsfahrzeug des Platoons festgelegt und an das Fahrzeug übermittelt wird oder die Grenz-Verzögerung vom Fahrzeug selbst festgelegt wird. Somit kann das eigene Fahrzeug unabhängig von den anderen Fahrzeugen sofort die Begrenzung vornehmen oder aber bei Abweichung von einer bestimmten Parametrierung auch die Daten vom Koordinierungsfahrzeug übernehmen.

Gemäß einer bevorzugten Weiterbildung ist vorgesehen, dass die Soll-Abstände von dem Koordinierungsfahrzeug festgelegt und zumindest an die Folgefahrzeuge übermittelt werden, wobei die Folgefahrzeuge den jeweiligen Soll-Abstand über ein Abstandsregelsystem einregeln. Somit wird vorteilhafterweise von einem zentral koordinierten Platoon ausgegangen.

Vorzugsweise ist weiterhin vorgesehen, dass die Bremssituation des Fahrzeuges, für die die Fahrzeug-Verzögerung auf die Grenz-Verzögerung begrenzt ist, automatisiert oder manuell eingeleitet wird. Die Bremssituation kann dabei beispielsweise eine Notbremssituation sein. Somit werden von der Begrenzung sowohl manuelle Eingriffe durch den Fahrer oder aber automatisierte Eingriff durch ein Fahrassistenzsystem erfasst, wobei hohe Fahrzeug-Verzögerungen, für die die Begrenzung bevorzugt ist, insbesondere in manuell oder automatisiert eingeleiteten Notbremsungen vorkommen. Aber auch andere Bremsvorgänge mit hohen Fahrzeug-Verzögerungen im Bereich der Grenz-Verzögerung profitieren von der Begrenzung, da auch in diesen Fällen Auffahrunfälle vermieden werden können.

Gemäß einer bevorzugten Ausführung ist weiterhin vorgesehen, dass die Begrenzung der Fahrzeug-Verzögerung auf die Grenz-Verzögerung bei Erfüllen des Begrenzungskriteriums von einem Platooning-Regelsystem oder vom Bremssystem des Fahrzeuges überwacht wird. Demnach kann der Platooning-Regler selbst für die Einhaltung der Begrenzung sorgen und eine Bremsanforderung u.U. begrenzend überschreiben oder aber es wird ein Begrenzungsbefehl an das Bremssystem ausgegeben, das somit selbst dafür sorgt, dass keine Bremsungen mit einer Fahrzeug-Verzögerung größer als der Grenz-Verzögerung durchgeführt werden.

Erfindungsgemäß ist das Platooning-Regelsystem ausgebildet, bei aktiviertem Platooning-Modus zu veranlassen, dass ein festgelegter Soll-Abstand zwischen dem Fahrzeug als Folgefahrzeug und dem unmittelbar davor fahrenden Führungsfahrzeug oder einem weiteren vorausfahrenden Folgefahrzeug des Platoons eingestellt wird, wobei das Platooning-Regelsystem dazu ein automatisiertes Ansteuern eines Bremssystems und/oder eines Antriebssystem des Fahrzeuges veranlassen kann und das Platooning-Regelsystem erfindungsgemäß weiterhin ausgebildet ist, bei Erfüllen eines Begrenzungskriteriums eine Begrenzung der Fahrzeug-Verzögerung des Fahrzeuges auf eine Grenz-Verzögerung wie beschrieben zu veranlassen, wobei wenn die Maximal-Verzögerung zumindest eines Fahrzeuges nicht bekannt ist, die Grenz-Verzögerung in Abhängigkeit einer gesetzlich vorgeschriebenen Mindest-Verzögerung festgelegt wird.

Dabei kann das Platooning-Regelsystem ein Abstandsregelsystem aufweisen oder mit einem Abstandsregelsystem mit Abstandssensoren in Wirkverbindung stehen, um den Soll-Abstand in einem Fahrzeug als Folgefahrzeug einzustellen und ggf. die Ist-Abstände zu überwachen.

Die Erfindung wird im Folgenden anhand von Ausführungsbeispielen näher erläutert. Es zeigen:
- Fig. 1: eine schematische Ansicht eines Platoons aus mehreren Fahrzeugen; und
- Fig. 2: ein Flussdiagramm zur Durchführung des erfindungsgemäßen Verfahrens.

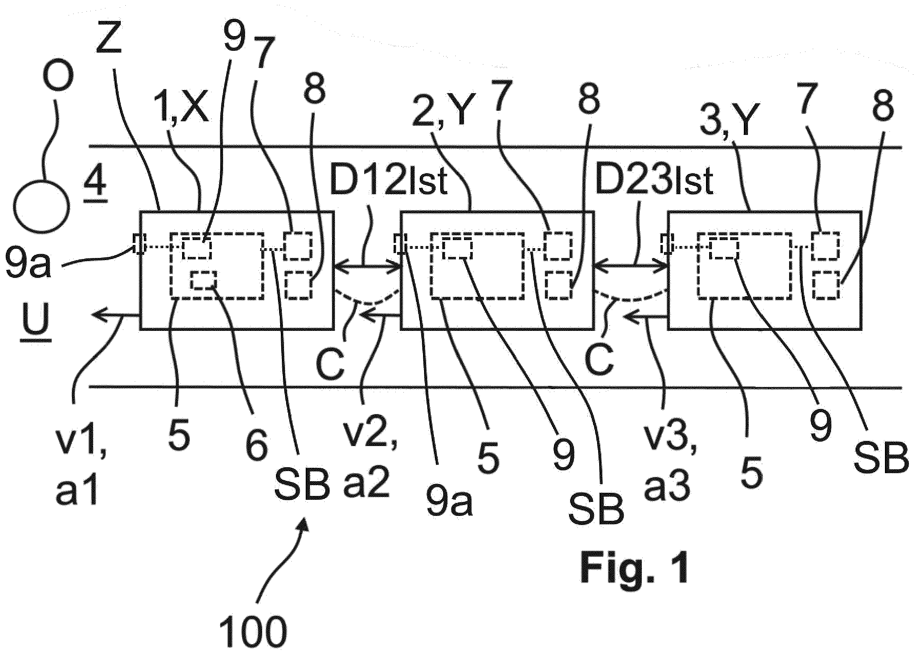

Gemäß Figur 1 ist ein Platoon 100 bzw. ein Konvoi aus drei Fahrzeugen 1, 2, 3 dargestellt, wobei sich die Fahrzeuge 1, 2, 3 auf einer Fahrbahn 4 hintereinander bewegen. Das vorausfahrende Fahrzeug 1 wird im Folgenden als Führungsfahrzeug X und die nachfolgenden Fahrzeuge 2 und 3 als Folgefahrzeuge Y des Platoons 100 bezeichnet. Es können auch mehr als zwei Folgefahrzeuge Y vorgesehen sein. Ein Ist-Abstand D12lst, D23Ist zwischen den einzelnen Fahrzeugen 1, 2, 3 wird bei Vorliegen eines Platooning-Modus P derartig auf einen vorgegebenen Soll-Abstand D12Soll, D23 Soll eingeregelt, dass ein Luftwiderstand und ein Flächenverbrauch zwischen den einzelnen Fahrzeugen 1, 2, 3 des Platoons 100 optimiert ist.

Um dies zu erreichen, werden die Ist-Abstände D12lst, D23ist jeweils über ein Platooning-Regelsystem 5, das in jedem der Fahrzeuge 1, 2, 3 installiert ist, automatisiert angepasst. Die Einstellung des Ist-Abstandes D12ist, D23ist erfolgt über ein Abstandsregelsystem 9 im jeweiligen Folgefahrzeug Y, das nach Art eines Abstandsregeltempomaten (Adaptive Cruise Control, ACC) den aktuellen Ist-Abstand D12ist, D23ist zwischen dem eigenen Folgefahrzeug Y und dem jeweils vorausfahrenden Fahrzeug 1, 2 (Führungsfahrzeug X oder weiteres Folgefahrzeug Y) über Abstandssensoren 9a ermittelt und diesen an den für das eigene Folgefahrzeug Y vorgegebenen Soll-Abstand D12Soll, D23Soll anpasst.

Das Platooning-Regelsystem 5 ist mit dem Abstandsregelsystem 9 entsprechend wirkverbunden oder ist mit diesem in einer Einheit zusammengefasst. Da das Führungsfahrzeug X grundsätzlich auch Folgefahrzeug Y in einem anders zusammengestellten Platoon 100 sein kann, kann auch dieses die beschriebenen Funktionen der Abstandsregelung aufweisen.

Die Platooning-Regelsysteme 5 der einzelnen Fahrzeuge 1, 2, 3 können sich untereinander abstimmen, so dass die Fahrdynamik, insbesondere eine Fahrzeug-Geschwindigkeit v1, v2, v3 und/oder eine Fahrzeug-Verzögerung a1, a2, a3, des jeweiligen Folgefahrzeuges Y und/oder in gewissen Situationen auch des Führungsfahrzeuges X unter Sicherheitsaspekten derartig gezielt angepasst werden kann, dass der vorgegebene Soll-Abstand D12Soll, D23Soll eingehalten wird. Die Platooning-Regelsysteme 5 sind dazu beispielsweise mit Brems- und Antriebssystemen 7, 8 im jeweiligen Folgefahrzeug Y bzw. Führungsfahrzeug X wirkverbunden, so dass die Fahrdynamik automatisiert verändert werden kann, wobei ein Bremsung sowohl über vom Bremssystem 7 gesteuerte Radbremsen oder Dauerbremsen als auch über eine vom Antriebssystem 8 gesteuerte Motorbremsung möglich ist.

Der Soll-Abstand D12Soll, D23Soll zwischen den einzelnen Fahrzeuge 1, 2, 3 kann dabei zentral von lediglich einem der Fahrzeuge 1, 2, 3 des Platoons 100, beispielsweise dem Führungsfahrzeug X, anhand von fahrdynamischen Kriterien in dessen Platooning-Regelsystem 5 ermittelt und an die einzelnen Folgefahrzeuge Y vorgegeben werden. Das Führungsfahrzeug X fungiert demnach gleichzeitig als Koordinierungsfahrzeug Z, das den Platoon 100 in Abhängigkeit von ausgetauschten Daten koordiniert. Das Koordinierungsfahrzeug Z kann grundsätzlich aber auch eines der Folgefahrzeuge Y sein. Die Ermittlung und Vorgabe des Soll-Abstandes D12Soll, D23Soll kann grundsätzlich auch dezentral anhand von ausgetauschten Daten in jedem der Fahrzeuge 1, 2, 3 erfolgen.

Die Abstimmung bzw. der Datenaustausch zwischen den einzelnen Fahrzeugen 1, 2, 3 erfolgt über eine drahtlose Datenkommunikation C, über die beispielsweise geometrische und/oder fahrdynamische Informationen zu den einzelnen Fahrzeugen 1, 2, 3 und/oder bezüglich einer Umgebung U übertragen werden können. Auch der vorgegebene Soll-Abstand D12Soll, D23Soll kann darüber vom Koordinierungsfahrzeug Z an die anderen Fahrzeuge 1, 2, 3 übertragen werden. Durch eine derartige Abstimmung bzw. Koordination der einzelnen Fahrzeuge 1, 2, 3 des Platoon 100 können Soll-Abstände D12Soll, D23Soll zwischen den einzelnen Fahrzeugen 1, 2, 3 vorgegeben und eingestellt werden, die unterhalb eines Sicherheitsabstandes liegen. Dadurch können der Luftwiderstand und damit auch der Kraftstoffverbrauch verringert werden.

Bei einer derartigen Abstimmung werden herkömmlicherweise gewisse Annahmen über das maximale Bremsvermögen der beteiligten Fahrzeuge 1, 2, 3 getroffen, die jedoch nicht in jeder Fahrsituation zuverlässig sind. Das maximale Bremsvermögen eines Fahrzeuges 1, 2, 3 ist nämlich unter Umständen nicht oder nur sehr ungenau bekannt, da es z.B. in Testbremsungen nicht ermittelt wurde bzw. je nach Konfiguration des Bremssystems 7, der Beladung, einer Anhängerkonfiguration oder Umgebungsbedingungen auch variieren kann. Eine das maximale Bremsvermögen charakterisierende Maximal-Verzögerung aMax1, aMax2, aMax3 des jeweiligen Fahrzeuges 1, 2, 3 die angibt, mit welcher maximalen Verzögerung das jeweilige Fahrzeug 1, 2, 3 in einer Fahrsituation abgebremst werden kann, steht den Platooning-Regelsystemen 5, insbesondere dem des Koordinierungsfahrzeuges Z, zur Koordination des Platoons 100 somit normalerweise nicht zur Verfügung. Dadurch können sich die einzelnen Platooning-Regelsysteme 5 in bestimmten Fahrsituationen nicht in zuverlässiger Weise untereinander über die drahtlose Kommunikation C abstimmen.

Dadurch kann es in Bremssituationen mit hohen ausgesteuerten Fahrzeug-Verzögerungen a1, a2, a3, beispielsweise in einer Notbremssituation N, dazu kommen, dass die Fahrzeuge 1, 2, 3 mit ihren jeweiligen Maximal-Verzögerungen aMax1, aMax2, aMax3 abgebremst werden, auf die der vorgegebene Soll-Abstand D12Soll, D23Soll aber nicht ausgelegt ist. Dies kann bei unterschiedlichen realen Fahrzeug-Verzögerungen a1, a2, a3 zu Auffahrunfällen führen, wenn in derartigen Bremssituationen beispielsweise das Führungsfahrzeug X stärker verzögert als das oder die Folgefahrzeuge Y. Eine solche Situation kann dabei nicht nur in einer Notbremssituation N auftreten, sondern bei beliebigen manuell durch den Fahrer oder automatisiert durch ein Fahrerassistenzsystem (ABS, RSC, etc.) vorgegebenen Bremsungen, in denen grundsätzlich ebenfalls eine hohe Fahrzeug-Verzögerung a1, a2, a3 angefordert werden kann.

Um diesem Umstand Rechnung zu tragen, ist erfindungsgemäß vorgesehen, dass die Fahrzeug-Verzögerung a1, a2, a3 für jedes Fahrzeug 1, 2, 3 auf eine Grenz-Verzögerung aG begrenzt wird, wenn ein Begrenzungskriterium K vorliegt, wobei das Begrenzungskriterium K im einfachsten Fall erfüllt ist, wenn sich das jeweilige Fahrzeug 1, 2, 3 in einem Platooning-Modus P befindet. Die Grenz-Verzögerung aG wird dabei auf einen Wert festgelegt, von dem angenommen wird, dass dieser von jedem der Fahrzeuge 1, 2, 3 im Platoon 100 mindestens umgesetzt werden kann. Eine Grenz-Verzögerung aG, die von jedem der Fahrzeuge 1, 2, 3 des Platoons 100 zumindest umgesetzt werden kann, ist dabei mit hoher Wahrscheinlichkeit eine gesetzlich vorgeschriebene Mindest-Verzögerung aM. Diese sollte von jedem funktionierenden regelkonformem Fahrzeug 1, 2, 3 des Platoons 100 unter Normbedingungen, d.h. zumindest auf trockener Fahrbahn, mit Sicherheit eingehalten werden können. Die gesetzliche Mindest-Verzögerung aM kann bei LKWs beispielsweise 5 m/s² oder bei LKWs mit Anhänger beispielsweise 4,5 m/s² betragen.

Dadurch kann erreicht werden, dass beispielsweise die Folgefahrzeuge Y des Platoons 100 in Fig. 1 in einer aufeinander abstimmten Bremssituation mit hohen angeforderten Fahrzeug-Verzögerungen a2, a3, beispielsweise in einer Notbremssituation N, immer zumindest so stark abgebremst werden können, wie das Führungsfahrzeug X des Platoons 100. Selbiges gilt für die beiden Folgefahrzeuge Y untereinander. Ein Auffahrunfall kann dadurch zumindest dann sicher vermieden werden, wenn die aufeinander abgestimmte Bremsung unter Normbedingungen auf trockener Fahrbahn 4 stattfindet und davon ausgegangen wird, dass die Folgefahrzeuge Y keinen Defekt an den Bremsen aufweisen.

Sobald der Platooning-Modus P in einem der Fahrzeuge 1, 2, 3 aktiv ist, wird somit gemäß dieser Ausführung automatisch veranlasst, dass eine Begrenzung der Fahrzeug-Verzögerung a1, a2, a3 für das betreffende Fahrzeug 1, 2, 3 auf die Grenz-Verzögerung aG, vorzugsweise die gesetzliche Mindest-Verzögerung aM, erfolgt. Diese Vorgabe kann durch das Platooning-Regelsystem 5 in jedem Fahrzeug 1, 2, 3 individuell erfolgen, sobald der Platooning-Modus P aktiv ist. Die Vorgabe kann aber auch zentral vom Koordinierungsfahrzeug Z, z.B. dem Führungsfahrzeug X, ausgehend erfolgen, das neben dem Soll-Abstand D12Soll, D23Soll somit auch die Grenz-Verzögerung aG über die drahtlose Kommunikation C vorgeben kann, sobald ein neues Folgefahrzeug Y dem Platoon 100 beitritt.

Die Umsetzung der Begrenzung auf die Grenz-Verzögerung aG kann beispielsweise dadurch erfolgen, dass das Platooning-Regelsystem 5 eines jeden Fahrzeuges 1, 2, 3 selbst in Wechselwirkung mit den Brems- und Antriebssystemen 7, 8 und/oder dem Abstandsregeltempomaten 9 tritt und veranlasst, dass die Fahrzeug-Verzögerung a1, a2, a3 nicht größer als die Grenz-Verzögerung aG eingestellt werden darf. Das Platooning-Regelsystem 5 ist somit im Platooning-Modus P in der Lage, jegliche automatisiert oder manuell vorgegebenen Bremsbefehle im jeweiligen Fahrzeug 1, 2, 3 zu überschreiben bzw. auf die Grenz-Verzögerung aG zu begrenzen.

Weiterhin kann aber auch ein entsprechender Begrenzungsbefehl SB an das Antriebs- bzw. Bremssystem 7, 8 ausgegeben werden, das dann automatisch dafür sorgt, dass die Grenz-Verzögerung aG bei aktiviertem Platooning-Modus P nicht überschritten wird. Jegliche manuellen oder automatisierten Vorgaben an das Brems- bzw. Antriebssystem 7, 8, beispielsweise auch manuelle Bremsvorgaben durch den Fahrer, werden dann auf diese Grenz-Verzögerung aG begrenzt.

Das Feststellen einer Notbremssituation N als beispielhafte Bremssituation mit hoher angeforderter Fahrzeug-Verzögerung a1, a2, a3 durch einen Notbremsassistenten 6, beispielsweise im Führungsfahrzeug X, erfolgt dabei bereits basierend auf der Grenz-Verzögerung aG. D.h. zur Berechnung einer Kollisionszeit tCol zu einem möglicherweise erkannten Kollisionsobjekt O wird diese Grenz-Verzögerung aG bereits herangezogen, so dass die Bewertung einer Notbremssituation N bereits auf den tatsächlich umsetzbaren Werten basiert. Außerhalb des Platooning-Modus P kann der Notbremsassistent 6 wieder auf andere Werte parametriert werden.

Unter der Annahme, dass eines der Folgefahrzeuge Y mit hoher Wahrscheinlichkeit auch stärker als die gesetzlich vorgeschriebene Mindest-Verzögerung aM abbremsen kann, kann die Grenz-Verzögerung aG auch auf einen Wert festgelegt werden, der um einen Sicherheitsfaktor S von beispielsweise zwischen 5% bis 15% höher liegt als die gesetzlich vorgeschriebene Mindest-Verzögerung aM.

Für das letzte Folgefahrzeug Y, 3 im Platoon 100 kann zudem die Begrenzung der Fahrzeug-Verzögerung a3 auf die Grenz-Verzögerung aG aufgehoben werden, da dieses innerhalb des Platoons 100 nicht in einen Auffahrunfall mit einem weiteren Folgefahrzeug des Platoons 100 verwickelt werden kann.

Durch diese Maßnahme kann also vorteilhafterweise erreicht werden, dass eine Differenz zwischen der eingestellten Fahrzeug-Verzögerung a1 z.B. des Führungsfahrzeuges X und dem unbekannten Bremsvermögen (aMax2, aMax3) der Folgefahrzeuge Y während einer Bremssituation mit hoher angeforderter Fahrzeug-Verzögerung a1, a2, a3, z.B. während einer Notbremssituation N, minimiert wird, da davon ausgegangen wird, dass das oder die Folgefahrzeuge Y zumindest mit der Grenz-Verzögerung aG bzw. der gesetzlich vorgeschriebenen Mindest-Verzögerung aM oder leicht drüber verzögert werden können. Somit kann ein sicherer Fahrbetrieb zumindest unter Normbedingungen ohne Auffahrunfälle auch im Platooning-Modus P sichergestellt werden.

Gemäß einer erweiterten Ausbildung kann vorgesehen sein, dass das Begrenzungskriterium K erst dann erfüllt ist und eine Begrenzung der Fahrzeug-Verzögerung a1, a2, a3 auf die Grenz-Verzögerung aG erst dann erfolgt, wenn tatsächlich festgestellt wird, dass die Notwendigkeit für eine Begrenzung besteht. Dazu werden die Ist-Abstände D12Ist, D23Ist zwischen den Fahrzeugen 1, 2, 3 im Platooning-Modus P dynamisch erfasst und daraus eine Ist-Abstands-Änderung dD12lst, dD23lst zwischen den jeweiligen Fahrzeugen 1, 2, 3 ermittelt. Dies kann über die Abstandssensoren 9a des Abstandsregeltempomaten 9 erfolgen. Ist die Ist-Abstands-Änderung dD12lst, dD23ist zwischen den jeweiligen Fahrzeugen 1, 2, 3 bei einer Bremsung negativ und fällt unter einen bestimmten Abstands-Grenzwert DG, d.h. der jeweilige Ist-Abstand D12lst, D23ist verkleinert sich in der jeweiligen Bremssituation zumindest um den Abstands-Grenzwert DG, ist das Begrenzungskriterium K erfüllt, da sich das jeweilige Folgefahrzeug Y bei einer Bremsung aufgrund eines geringeren maximalen Bremsvermögens auf das davor fahrende Fahrzeug 1, 2 zubewegt. Der Abstands-Grenzwert DG wird festgelegt, um eine anfängliche Reduzierung des Ist-Abstandes D12ist, D23ist bei einer Bremsung aufgrund einer Reaktionszeit des jeweiligen Fahrzeuges 1, 2, 3 zu berücksichtigen.

Das Erfüllen des Begrenzungskriteriums K kann dabei vom jeweiligen Folgefahrzeug Y auf das vorausfahrende Fahrzeug 1, 2 und/oder das Koordinierungsfahrzeug Z über die drahtlose Kommunikation C gemeldet werden, woraufhin die Begrenzung auf die Grenz-Verzögerung aG wie oben beschrieben für die Fahrzeuge 1, 2, 3 des Platoons 100 in Kraft tritt. Mit einem solchen Ansatz kann die Begrenzung der Fahrzeug-Verzögerung a1, a2, a3 im Platooning-Modus P auf das notwendige Mindestmaß beschränkt bleiben, da tatsächlich nur dann eine Begrenzung stattfindet, wenn dies aufgrund eines tatsächlich festgestellten abweichenden maximalen Bremsvermögens nötig ist.

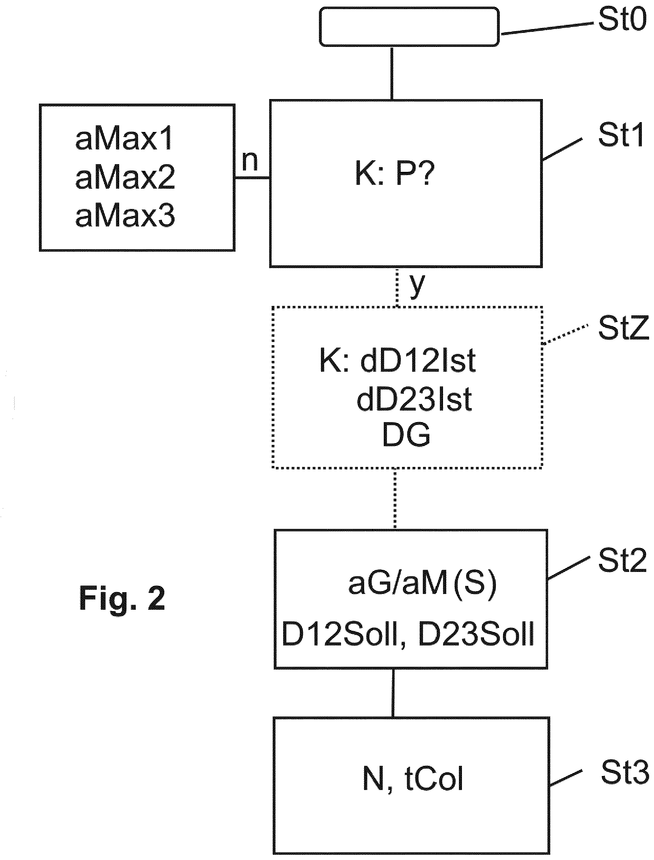

Gemäß Fig. 2 kann das erfindungsgemäß Verfahren beispielsweise wie folgt ausgeführt werden. Nach einer Initialisierung im Schritt St0, beispielsweise beim Starten des jeweiligen Fahrzeuges 1, 2, 3, wird in einem ersten Schritt St1 zunächst geprüft, ob sich das jeweilige Fahrzeug 1, 2, 3 in einem Platoon 100 befindet. Ist dies nicht der Fall, findet keine Modifikation in der Einstellung der Fahrzeug-Verzögerung a1, a2, a3 des jeweiligen Fahrzeuges 1, 2, 3 statt. Demnach kann das Fahrzeug 1, 2, 3 auch mit der jeweiligen Maximal-Verzögerung aMax1, aMax2, aMax3 verzögert werden.

Liegt jedoch ein Platooning-Modus P vor, wird in dem jeweiligen Fahrzeug 1, 2, 3 des Platoons 100 in einem zweiten Schritt St2 eine bestimmte Grenz-Verzögerung aG eingestellt, die durch eine Bremsanforderung nicht überschritten werden darf. Die Grenz-Verzögerung aG wird im jeweiligen Fahrzeug 1, 2, 3 selbstständig eingestellt oder vom Koordinierungsfahrzeug Z des Platoons 100 wie diese bei Eintritt in den Platoon 100 vorgegeben. Die Grenz-Verzögerung aG wird dabei auf einen Wert festgelegt, von dem angenommen wird, dass dieser von jedem der Fahrzeuge 1, 2, 3 im Platoon 100 mindestens umgesetzt werden kann. Dieser Wert kann vorzugsweise durch die gesetzliche Mindest-Verzögerung aM ggf. unter Berücksichtigung eines Sicherheitsfaktors S von z.B. zwischen 5% und 15% gegeben sein. Gleichzeitig wird unter dieser Voraussetzung der Soll-Abstand DS12Soll, DS23Soll über das Abstandsregelsystem 9 eingeregelt.

In einem optionalen Zwischenschritt StZ kann vor einer Bremsung im Platooning-Modus P zunächst überprüft werden, ob sich eines der Folgefahrzeuge Y an das jeweils vorausfahrende Fahrzeug 1(X), 2(Y) um mehr als einen Grenz-Abstand annähert. Wird bei dieser Überprüfung darauf geschlossen, dass das maximale Bremsvermögen eines der Folgefahrzeuge Y geringer ist als das des davor fahrenden Fahrzeuges 1 (X), 2 (Y) findet eine Vorgabe der Grenz-Beschleunigung aG für alle Fahrzeuge 1, 2, 3 des Platoons 100 statt.

Somit kann entweder im Schritt St1 bereits ein Erfüllen des Begrenzungskriteriums K festgestellt werden oder aber erst im Zwischenschritt StZ.

In einer darauffolgenden manuell oder automatisiert veranlassten Bremsung, beispielsweise in einer Notbremsung N, in einem dritten Schritt St3 wird die Fahrzeug-Verzögerung a1, a2, a3 der betreffenden Fahrzeuge 1, 2, 3 dann entsprechend begrenzt und somit dafür gesorgt, dass die Fahrzeug-Verzögerung a1, a2, a3 bei einer beliebigen Bremsanforderung nicht über die Grenz-Verzögerung aG steigt.

### Bezugszeichenliste (Teil der Beschreibung)

- 1, 2, 3: Fahrzeuge des Platoons 100
- 4: Fahrbahn
- 5: Platooning-Regelsystem
- 6: Notbremsassistent
- 7: Bremssystem
- 8: Antriebssystem
- 9: Abstandsregelsystem
- 9a: Abstandssensor
- 100: Platoon

- a1, a2, a3: Fahrzeug-Verzögerung
- aG: Grenz-Verzögerung
- aM: gesetzliche Mindest-Verzögerung
- aMax1, aMax2, aMax3: Maximal-Verzögerung
- C: drahtlose Datenkommunikation
- D12lst, D23Ist: Ist-Abstand
- D12Soll, D23Soll: Soll-Abstand
- DG: Grenz-Abstand
- K: Begrenzungskriterium
- N: Notbremssituation
- O: Kollisionsobjekt
- P: Platooning-Modus
- S: Sicherheitsfaktor
- SB: Begrenzungsbefehl
- tCol: Kollisionszeit
- U: Umgebung
- v1, v2, v3: Fahrzeug-Geschwindigkeit
- X: Führungsfahrzeug
- Y: Folgefahrzeug
- Z: Koordinierungsfahrzeug
- St0, St1, StZ, St2, St3: Schritte des Verfahrens

## Patentansprüche

1. Verfahren zum Einstellen einer Fahrzeug-Verzögerung (a1, a2, a3) eines in einem Platoon (100) fahrenden Fahrzeuges (1, 2, 3), wobei das Fahrzeug (1, 2, 3) ein Führungsfahrzeug (X) oder ein mittelbar oder unmittelbar dahinter fahrendes Folgefahrzeug (Y) ist, wobei bei Vorliegen eines Platooning-Modus (P)
- zwischen dem Fahrzeug (1) als Führungsfahrzeug (X) und dem unmittelbar dahinter fahrenden Folgefahrzeug (Y), oder
- zwischen dem Fahrzeug (2, 3) als Folgefahrzeug (Y) und dem unmittelbar davor fahrenden Führungsfahrzeug (X) sowie mindestens einem unmittelbar hinter dem Fahrzeug (2, 3) fahrenden weiteren Folgefahrzeug (Y) ein vorgegebener Soll-Abstand (D12Soll, D23Soll) eingestellt wird,
wobei die Fahrzeug-Verzögerung (a1, a2, a3) des Fahrzeuges (1, 2, 3) als Führungsfahrzeug (X) oder als Folgefahrzeug (Y) bei Erfüllen eines Begrenzungskriteriums (K) auf eine Grenz-Verzögerung (aG, aM) begrenzt wird,
**dadurch gekennzeichnet, dass** wenn
die Maximal-Verzögerung (aMax1, aMax2, aMax3) zumindest eines Fahrzeuges (1, 2, 3) nicht bekannt ist,
die Grenz-Verzögerung (aG) in Abhängigkeit einer gesetzlich vorgegebenen Mindest-Verzögerung (aM) festgelegt wird.

2. Verfahren nach Anspruch 1, **dadurch gekennzeichnet, dass** von der Grenz-Verzögerung (aG, aM) angenommen wird, dass jedes der hinter dem Fahrzeug (1, 2, 3) fahrenden Folgefahrzeuge (Y) des Platoons (100) zumindest diese Grenz-Verzögerung (aG, aM) umsetzen kann, so dass das Fahrzeug (1, 2, 3) als vorausfahrendes Führungsfahrzeug (X) oder als vorausfahrendes Folgefahrzeug (Y) in einer Bremssituation (N) maximal so stark verzögert wird, wie jedes hinter dem Fahrzeug (1, 2, 3) fahrende Folgefahrzeug (Y) des Platoons (100) ebenfalls.

3. Verfahren nach Anspruch 1, **dadurch gekennzeichnet, dass** die Grenz-Verzögerung (aG) der gesetzlichen Mindest-Verzögerung (aM) entspricht oder einem Wert, der von der gesetzlichen Mindest-Verzögerung (aM) um einen Sicherheitsfaktor (S) abweicht, wobei der Sicherheitsfaktor (S) zwischen 5% und 20% der gesetzlichen Mindest-Verzögerung (aM) beträgt.

4. Verfahren nach einem der vorhergehenden Ansprüche, **dadurch gekennzeichnet, dass** das Begrenzungskriterium (K) erfüllt ist, sobald der Platooning-Modus (P) in dem Fahrzeug (1, 2, 3) aktiviert wird.

5. Verfahren nach einem der Ansprüche 1 bis 3, **dadurch gekennzeichnet, dass** das Begrenzungskriterium (K) erfüllt ist, wenn bei einer Überwachung von Ist-Abständen (D12Ist, D231st) zwischen dem Führungsfahrzeug (X) und einem unmittelbar dahinter fahrenden Folgefahrzeug (Y) und/oder zwischen zwei unmittelbar hintereinander fahrenden Folgefahrzeugen (Y) des Platoons (100) bei einem Bremsvorgang festgestellt wird, dass sich der jeweilige Ist-Abstand (D12Ist, D231st) um zumindest einen Grenz-Abstand (DG) verringert.

6. Verfahren nach Anspruch 5, **dadurch gekennzeichnet, dass** die Ist-Abstände (D12Ist, D231st) dynamisch über Abstandssensoren (9a) im jeweiligen Folgefahrzeug (Y) ermittelt werden.

7. Verfahren nach Anspruch 5 oder 6, **dadurch gekennzeichnet, dass** das Erfüllen des Begrenzungskriteriums (K) über eine drahtlose Datenkommunikation (C) auf das Fahrzeug (1, 2, 3) als Führungsfahrzeug (X) oder als Folgefahrzeug (Y) übermittelt wird, so dass daraufhin die Fahrzeug-Verzögerung (a1, a2, a3) des Fahrzeuges (1, 2, 3) auf die Grenz-Verzögerung (aG, aM) begrenzt werden kann.

8. Verfahren nach einem der Ansprüche 1 bis 3, **dadurch gekennzeichnet, dass** das Begrenzungskriterium (K) für das Fahrzeug (1, 2, 3) dauerhaft als nicht erfüllt festgelegt wird, wenn das Fahrzeug (1, 2, 3) ein Folgefahrzeug (Y) ist, dem kein weiteres Folgefahrzeug (Y) im Platoon (100) folgt.

9. Verfahren nach einem der vorhergehenden Ansprüche, **dadurch gekennzeichnet, dass** die Grenz-Verzögerung (aG, aM) von einem Koordinierungsfahrzeug (Z) des Platoons (100) festgelegt und an das Fahrzeug (1, 2, 3) übermittelt wird oder die Grenz-Verzögerung (aG, aM) vom Fahrzeug (1, 2, 3) selbst festgelegt wird.

10. Verfahren nach einem der vorhergehenden Ansprüche, **dadurch gekennzeichnet, dass** die Soll-Abstände (D12Soll, D23Soll) von einem Koordinierungsfahrzeug (Z) festgelegt und zumindest an die Folgefahrzeuge (Y) übermittelt werden, wobei die Folgefahrzeuge (Y) den jeweiligen Soll-Abstand (DS12Soll, DS23Soll) über ein Abstandsregelsystem (9) einregeln.

11. Verfahren nach einem der vorhergehenden Ansprüche, **dadurch gekennzeichnet, dass** die Bremssituation (N) des Fahrzeuges (1, 2, 3), für die die Fahrzeug-Verzögerung (a1, a2, a3) auf die Grenz-Verzögerung (aG, aM) begrenzt ist, automatisiert oder manuell eingeleitet wird.

12. Verfahren nach Anspruch 10, **dadurch gekennzeichnet, dass** die Bremssituation eine Notbremssituation (N) ist.

13. Verfahren nach einem der vorhergehenden Ansprüche, **dadurch gekennzeichnet, dass** die Begrenzung der Fahrzeug-Verzögerung (aG, aM) auf die Grenz-Verzögerung (aG) bei Erfüllen des Begrenzungskriteriums (K) von einem Platooning-Regelsystem (5) oder vom Bremssystem (7) des Fahrzeuges (1, 2, 3) überwacht wird.

14. Platooning-Regelsystem (5), insbesondere zur Durchführung des Verfahrens nach einem der vorhergehenden Ansprüche, wobei das Platooning-Regelsystem (5) ausgebildet ist, bei aktiviertem Platooning-Modus (P) zu veranlassen, dass ein festgelegter Soll-Abstand (D12Soll, D23Soll) zwischen dem Fahrzeug (2, 3) als Folgefahrzeug (Y) und dem unmittelbar davor fahrenden Führungsfahrzeug (X) oder einem weiteren vorausfahrenden Folgefahrzeug (Y) des Platoons (100) eingestellt wird, wobei das Platooning-Regelsystem (5) dazu ein automatisiertes Ansteuern eines Bremssystems (7) und/oder eines Antriebssystem (8) des Fahrzeuges (1, 2, 3) veranlassen kann, wobei das Platooning-Regelsystem (5) weiterhin ausgebildet ist, bei Erfüllen eines Begrenzungskriteriums (K) eine Begrenzung der Fahrzeug-Verzögerung (a1, a2, a3) des Fahrzeuges (1, 2, 3) auf eine Grenz-Verzögerung (aG, aM) zu veranlassen , **dadurch gekennzeichnet dass**, wenn die Maximal-Verzögerung (aMax1, aMax2, aMax3) zumindest eines Fahrzeuges (1, 2, 3) nicht bekannt ist, die Grenz-Verzögerung (aG) in Abhängigkeit einer gesetzlich vorgegebenen Mindest-Verzögerung (aM) festgelegt wird.

15. Platooning-Regelsystem (5) nach Anspruch 14, **dadurch gekennzeichnet, dass** das Platooning-Regelsystem (5) ein Abstandsregelsystem (9) aufweist oder mit einem Abstandsregelsystem (9) mit Abstandssensoren (9a) in Wirkverbindung steht zum Einstellen des Soll-Abstandes (DS12Soll, DS23Soll) in einem Fahrzeug (1, 2, 3) als Folgefahrzeug (Y).

16. Platooning-Regelsystem (5) nach Anspruch 14 oder 15, **dadurch gekennzeichnet, dass** das Platooning-Regelsystem (5) zur Begrenzung der Fahrzeug-Verzögerung (a1, a2, a3) ein Begrenzungsbefehl (SB) an das Bremssystem (7) ausgeben kann, so dass das Bremssystem (7) auf den Begrenzungsbefehl (SB) hin die Fahrzeug-Verzögerung (a1, a2, a3) des Fahrzeuges (1, 2, 3) auf die Grenz-Verzögerung (aG, aM) begrenzen kann.

17. Fahrzeug (1, 2, 3) mit einem Platooning-Regelsystem (5) nach einem der Ansprüche 14 bis 16, wobei das Fahrzeug (1, 2, 3) ein Führungsfahrzeug (X) oder ein Folgefahrzeug (Y) in einem Platoon (100) sein kann.

## Claims

1. Method for setting a vehicle deceleration (a1, a2, a3) of a vehicle (1, 2, 3) driving in a platoon (100), wherein the vehicle (1, 2, 3) is a guide vehicle (X) or a following vehicle (Y) traveling indirectly or directly behind, wherein, if a platooning mode (P) is present,
- between the vehicle (1) as a guide vehicle (X) and the following vehicle (Y) traveling directly behind, or
- between the vehicle (2, 3) as a following vehicle (Y) and the guide vehicle (X) traveling directly ahead and at least one further following vehicle (Y) traveling directly behind the vehicle (2, 3),
a predetermined target distance (D12Soll, D23Soll) is set, wherein the vehicle deceleration (a1, a2, a3) of the vehicle (1, 2, 3) as a guide vehicle (X) or as a following vehicle (Y) is limited to a limit deceleration (aG, aM) when a limiting criterion (K) is met, **characterized in that** if
the maximum deceleration (aMax1, aMax2, aMax3) of at least one vehicle (1, 2, 3) is not known, the limit deceleration (aG) is defined depending on a legally predetermined minimum deceleration (aM).

2. Method according to claim 1, **characterized in that** it is assumed from the limit deceleration (aG, aM) that each of the following vehicles (Y) of the platoon (100) traveling behind the vehicle (1, 2, 3) can achieve at least this limit deceleration (aG, aM), so that the vehicle (1, 2, 3) as a leading guide vehicle (X) or as a leading following vehicle (Y) is decelerated in a braking situation (N) at most as much as any following vehicle (Y) of the platoon (100) traveling behind the vehicle (1, 2, 3).

3. Method according to claim 1, **characterized in that** the limit deceleration (aG) corresponds to the legal minimum deceleration (aM) or a value that deviates from the legal minimum deceleration (aM) by a safety factor (S), the safety factor (S) being between 5% and 20% of the legal minimum deceleration (aM).

4. Method according to any of the preceding claims, **characterized in that** the limiting criterion (K) is met as soon as the platooning mode (P) is activated in the vehicle (1, 2, 3).

5. Method according to any of claims 1 to 3, **characterized in that** the limiting criterion (K) is met when, during a monitoring of actual distances (D12Ist, D23lst) between the guide vehicle (X) and a following vehicle (Y) traveling directly behind and/or between two following vehicles (Y) of the platoon (100), which are traveling directly one behind the other, during a braking operation, it is determined that the relevant actual distance (D12Ist, D23lst) is reduced by at least a limit distance (DG).

6. Method according to claim 5, **characterized in that** the actual distances (D12Ist, D23lst) are dynamically determined via distance sensors (9a) in the relevant following vehicle (Y).

7. Method according to either claim 5 or claim 6, **characterized in that** the meeting of the limiting criterion (K) is transmitted via wireless data communication (C) to the vehicle (1, 2, 3) as a guide vehicle (X) or as a following vehicle (Y), so that the vehicle deceleration (a1, a2, a3) of the vehicle (1, 2, 3) can then be limited to the limit deceleration (aG, aM).

8. Method according to any of claims 1 to 3, **characterized in that** the limiting criterion (K) for the vehicle (1, 2, 3) is permanently defined as not met if the vehicle (1, 2, 3) is a following vehicle (Y) which does not follow a further following vehicle (Y) in the platoon (100).

9. Method according to any of the preceding claims, **characterized in that** the limit deceleration (aG, aM) is defined by a coordination vehicle (Z) of the platoon (100) and is transmitted to the vehicle (1, 2, 3) or the limit deceleration (aG, aM) is defined by the vehicle (1, 2, 3) itself.

10. Method according to any of the preceding claims, **characterized in that** the target distances (D12Soll, D23Soll) are defined by a coordination vehicle (Z) and are transmitted at least to the following vehicles (Y), the following vehicles (Y) controlling the relevant target distance (DS12Soll, DS23Soll) via a distance control system (9).

11. Method according to any of the preceding claims, **characterized in that** the braking situation (N) of the vehicle (1, 2, 3), for which the vehicle deceleration (a1, a2, a3) is limited to the limit deceleration (aG, aM), is automatically or manually initiated.

12. Method according to claim 10, **characterized in that** the braking situation is an emergency braking situation (N).

13. Method according to any of the preceding claims, **characterized in that** the limitation of the vehicle deceleration (aG, aM) to the limit deceleration (aG) is monitored by a platooning control system (5) or by the braking system (7) of the vehicle (1, 2, 3) when the limiting criterion (K) is met.

14. Platooning control system (5), in particular for carrying out the method according to any of the preceding claims, wherein the platooning control system (5) is designed, when the platooning mode (P) is activated, to cause a defined target distance (D12Soll, D23Soll) between the vehicle (2, 3) as a following vehicle (Y) and the guide vehicle (X) traveling directly ahead or a further leading following vehicle (Y) of the platoon (100) to be set, wherein the platooning control system (5) can cause automated control of a braking system (7) and/or of a drive system (8) of the vehicle (1, 2, 3), wherein the platooning control system (5) is further designed to cause a limitation of the vehicle deceleration (a1, a2, a3) of the vehicle (1, 2, 3) to a limit deceleration (aG, aM) when a limiting criterion (K) is met, **characterized in that** if the maximum deceleration (aMax1, aMax2, aMax3) of at least one vehicle (1, 2, 3) is not known, the limit deceleration (aG) is defined depending on a legally predetermined minimum deceleration (aM).

15. Platooning control system (5) according to claim 14, **characterized in that** the platooning control system (5) has a distance control system (9) or is operatively connected to a distance control system (9) with distance sensors (9a) in order to adjust the target distance (DS12Soll, DS23Soll) in a vehicle (1, 2, 3) as a following vehicle (Y).

16. Platooning control system (5) according to either claim 14 or claim 15, **characterized in that** the platooning control system (5) can, in order to limit the vehicle deceleration (a1, a2, a3), output a limiting command (SB) to the brake system (7), so that the brake system (7) can limit the vehicle deceleration (a1, a2, a3) of the vehicle (1, 2, 3) to the limit deceleration (aG, aM) in response to the limiting command (SB).

17. Vehicle (1, 2, 3) comprising a platooning control system (5) according to any of claims 14 to 16, wherein the vehicle (1, 2, 3) can be a guide vehicle (X) or a following vehicle (Y) in a platoon (100).

## Revendications

1. Procédé pour le réglage d'une décélération de véhicule (a1, a2, a3) d'un véhicule (1, 2, 3) roulant dans un convoi (100), le véhicule (1, 2, 3) étant un véhicule meneur (X) ou un véhicule suiveur (Y) roulant directement ou indirectement derrière celui-ci, en cas d'existence d'un mode de conduite en convoi (P), une distance de consigne (D12Soll, D23Soll) prédéfinie étant réglée
- entre le véhicule (1) en tant que véhicule meneur (X) et le véhicule suiveur (Y) roulant directement derrière celui-ci, ou
- entre le véhicule (2, 3) en tant que véhicule suiveur (Y) et le véhicule meneur (X) roulant directement devant celui-ci ainsi qu'au moins un autre véhicule suiveur (Y) roulant directement derrière le véhicule (2, 3),
la décélération de véhicule (a1, a2, a3) du véhicule (1, 2, 3) en tant que véhicule meneur (X) ou en tant que véhicule suiveur (Y) étant limitée à une décélération limite (aG, aM) lors de la satisfaction d'un critère de limitation (K), **caractérisé en ce que,** lorsque
la décélération maximale (aMax1, aMax2, aMax3) d'au moins un véhicule (1, 2, 3) n'est pas connue, la décélération limite (aG) est établie en fonction d'une décélération minimale (aM) prédéfinie légalement.

2. Procédé selon la revendication 1, **caractérisé en ce qu'**il est assumé, concernant la décélération limite (aG, aM), que chacun des véhicules suiveurs (Y) du convoi (100) roulant derrière le véhicule (1, 2, 3) peut mettre en oeuvre au moins ladite décélération limite (aG, aM), de telle sorte que le véhicule (1, 2, 3) en tant que véhicule meneur (X) qui précède ou en tant que véhicule suiveur (Y) qui précède est décéléré, dans une situation de freinage (N), au maximum autant que chaque véhicule suiveur (Y) du convoi (100) roulant derrière le véhicule (1, 2, 3).

3. Procédé selon la revendication 1, **caractérisé en ce que** la décélération limite (aG) correspond à la décélération minimale (aM) légale ou à une valeur qui diverge de la décélération minimale (aM) légale d'un facteur de sécurité (S), le facteur de sécurité (S) étant compris entre 5 % et 20 % de la décélération minimale (aM) légale.

4. Procédé selon l'une des revendications précédentes,
**caractérisé en ce que** le critère de limitation (K) est satisfait dès que le mode de conduite en convoi (P) est activé dans le véhicule (1, 2, 3).

5. Procédé selon l'une des revendications 1 à 3, **caractérisé en ce que** le critère de limitation (K) est satisfait lorsque, lors d'une surveillance de distances réelles (D12Ist, D23Ist) entre le véhicule meneur (X) et un véhicule suiveur (Y) roulant directement derrière celui-ci et/ou entre deux véhicules suiveurs (Y) du convoi (100) roulant directement l'un derrière l'autre, il est constaté, lors d'un processus de freinage, que la distance réelle (D12Ist, D23Ist) respective se réduit d'au moins une distance limite (DG).

6. Procédé selon la revendication 5, **caractérisé en ce que** les distances réelles (D12Ist, D23lst) sont déterminées dynamiquement par l'intermédiaire de capteurs de distance (9a) dans le véhicule suiveur (Y) respectif.

7. Procédé selon la revendication 5 ou 6, **caractérisé en ce que** la satisfaction du critère de limitation (K) est transmise par l'intermédiaire d'une communication de données sans fil (C) au véhicule (1, 2, 3) en tant que véhicule meneur (X) ou en tant que véhicule suiveur (Y) de telle sorte que, suite à cela, la décélération de véhicule (a1, a2, a3) du véhicule (1, 2, 3) peut être limitée à la décélération limite (aG, aM).

8. Procédé selon l'une des revendications 1 à 3, **caractérisé en ce que** le critère de limitation (K) est établi comme non satisfait en permanence pour le véhicule (1, 2, 3) lorsque le véhicule (1, 2, 3) est un véhicule suiveur (Y) qui n'est suivi par aucun autre véhicule suiveur (Y) dans le convoi (100).

9. Procédé selon l'une des revendications précédentes,
**caractérisé en ce que** la décélération limite (aG, aM) est établie par un véhicule de coordination (Z) du convoi (100) et est transmise au véhicule (1, 2, 3) ou la décélération limite (aG, aM) est établie par le véhicule (1, 2, 3) même.

10. Procédé selon l'une des revendications précédentes,
**caractérisé en ce que** les distances de consigne (D12Soll, D23Soll) sont établies par un véhicule de coordination (Z) et sont transmises au moins aux véhicules suiveurs (Y), les véhicules suiveurs (Y) régulant la distance de consigne (DS12Soll, DS23Soll) respective par l'intermédiaire d'un système de régulation de distance (9).

11. Procédé selon l'une des revendications précédentes,
**caractérisé en ce que** la situation de freinage (N) du véhicule (1, 2, 3), pour laquelle la décélération de véhicule (a1, a2, a3) est limitée à la décélération limite (aG, aM), est déclenchée automatiquement ou manuellement.

12. Procédé selon la revendication 10, **caractérisé en ce que** la situation de freinage est une situation de freinage d'urgence (N).

13. Procédé selon l'une des revendications précédentes,
**caractérisé en ce que** la limitation de la décélération de véhicule (aG, aM) à la décélération limite (aG) lors de la satisfaction du critère de limitation (K) est surveillée par un système de régulation de conduite en convoi (5) ou par le système de freinage (7) du véhicule (1, 2, 3).

14. Système de régulation de conduite en convoi (5), en particulier pour l'exécution du procédé selon l'une des revendications précédentes, le système de régulation de conduite en convoi (5) étant configuré pour, lorsque le mode de conduite en convoi (P) est activé, provoquer le réglage d'une distance de consigne (D12Soll, D23Soll) établie entre le véhicule (2, 3) en tant que véhicule suiveur (Y) et le véhicule meneur (X) roulant directement devant celui-ci ou un autre véhicule suiveur (Y) du convoi (100) le précédant, le système de régulation de conduite en convoi (5) pouvant ainsi provoquer une commande automatisée d'un système de freinage (7) et/ou d'un système d'entraînement (8) du véhicule (1, 2, 3), le système de régulation de conduite en convoi (5) étant en outre configuré pour, lors de la satisfaction d'un critère de limitation (K), provoquer une limitation de la décélération de véhicule (a1, a2, a3) du véhicule (1, 2, 3) à une décélération limite (aG, aM), **caractérisé en ce que,** lorsque la décélération maximale (aMax1, aMax2, aMax3) d'au moins un véhicule (1, 2, 3) n'est pas connue, la décélération limite (aG) est établie en fonction d'une décélération minimale (aM) prédéfinie légalement.

15. Système de régulation de conduite en convoi (5) selon la revendication 14, **caractérisé en ce que** le système de régulation de conduite en convoi (5) présente un système de régulation de distance (9) ou est en liaison active avec un système de régulation de distance (9) comportant des capteurs de distance (9a) pour le réglage de la distance de consigne (DS12Soll, DS23Soll) dans un véhicule (1, 2, 3) en tant que véhicule suiveur (Y).

16. Système de régulation de conduite en convoi (5) selon la revendication 14 ou 15, **caractérisé en ce que** le système de régulation de conduite en convoi (5) peut, pour la limitation de la décélération de véhicule (a1, a2, a3), émettre une instruction de limitation (SB) au système de freinage (7), de telle sorte que le système de freinage (7) peut, à partir de l'instruction de limitation (SB), limiter la décélération de véhicule (a1, a2, a3) du véhicule (1, 2, 3) à la décélération limite (aG, aM).

17. Véhicule (1, 2, 3) comportant un système de régulation de conduite en convoi (5) selon l'une des revendications 14 à 16, le véhicule (1, 2, 3) pouvant être un véhicule meneur (X) ou un véhicule suiveur (Y) dans un convoi (100).
